# EUROPÄISCHE PATENTSCHRIFT

(11) **EP 3 356 114 B1**
(45) Veröffentlichungstag und Bekanntmachung des Hinweises auf die Patenterteilung: **02.06.2021**
(21) Anmeldenummer: 16766482.0
(22) Anmeldetag: 07.09.2016
(51) Int. Cl.: B29C 49/46, B29C 48/20

(54) **VORRICHTUNG ZUR REDUZIERUNG DER MIKROBIOLOGISCHEN KONTAMINANTEN VON BEHÄLTERERZEUGNISSEN**
DEVICE FOR REDUCING MICROBIOLOGICAL CONTAMINANTS OF CONTAINER PRODUCTS
SYSTÈME PERMETTANT DE RÉDUIRE LA CHARGE EN CONTAMINANTS MICROBIOLOGIQUES DE PRODUITS DE TYPE CONTENANT

(30) Priorität: 01.10.2015 DE 102015012937
(43) Veröffentlichungstag der Anmeldung: 08.08.2018
(73) Patentinhaber: Kocher-Plastik Maschinenbau GmbH, 74429 Sulzbach-Laufen (DE)
(72) Erfinder: GROH, Martin, 74405 Gaildorf (DE); SPALLEK, Michael, 55218 Ingelheim (DE); BOHN, Christoph, 71566 Althütte (DE)
(74) Vertreter: Bartels und Partner, Patentanwälte
(86) Internationale Anmeldenummer: PCT/EP2016/001511
(87) Internationale Veröffentlichungsnummer: WO 2017/054903

(56) Entgegenhaltungen:
- EP-A1- 1 825 906
- EP-A2- 1 116 569
- DE-A1- 3 839 980
- DE-A1-102008 006 073
- US-A- 4 063 865
- US-A- 4 170 446
- US-A- 5 208 048
- US-A- 5 454 208

## Beschreibung

Die Erfindung betrifft einen Schlauchkopf mit den Merkmalen im Oberbegriff von Anspruch 1 und eine Vorrichtung zur Reduzierung der mikrobiologischen Belastung von Behältererzeugnissen mit einem solchen Schlauchkopf.

Bei der Herstellung von Kunststoffbehältern einschließlich Ampullenerzeugnissen für Lebensmittel, Kosmetika oder für medizinische Zwecke, insbesondere Ophtalmika, Parenteralia oder für künstliche Ernährung, ist die mikrobiologische Qualität des Füllguts von wesentlicher Bedeutung. Die Anforderungen der internationalen Arzneibücher müssen erfüllt werden. Entscheidend hierfür ist zum einen die Sterilität des Füllguts vor der Befüllung, die z.B. durch Sterilfiltration erreicht werden kann. Zum anderen ist die Sterilität der Behälterinnenoberflächen der Kunststoff-Behältererzeugnisse von entscheidender Bedeutung.

Im Folgenden soll der Begriff "mikrobiologische Kontaminanten" als zusammenfassender Begriff verstanden werden von Bakterien, Sporen, Hefen, Pilzen, Viren sowie Endotoxinen, die man früher fachsprachlich auch als Pyrogene bezeichnet hat. Im Englischen spricht man fachsprachlich in diesem Zusammenhang auch von "Bioburden".

Zur Minimierung respektive weitgehenden Vermeidung mikrobiologischer Kontaminanten sind im Stand der Technik bereits Vorschläge gemacht worden. So beschreibt die DE 10 2008 032 635 A1 ein Verfahren nebst Vorrichtung für die Lebensmittel- und Getränkeindustrie zur mikrobiologisch optimierten Herstellung von blasgeformten Kunststoffbehältern. Dabei wird bei der bekannten Lösung während des Blasvorgangs für den Kunststoffbehälter in das Innere des dahingehenden Vorformlings ein Medium, beispielsweise in Form von Luft, geleitet mit einer Temperatur zwischen 80 °C bis 140 °C, was im Sinne einer Sterilisierung der Abtötung von Keimen dienen soll. Damit dieses Verfahren wirken kann, sind im Hinblick auf die relativ niedrigen Behandlungstemperaturen sehr lange Behandlungszeiten notwendig, durchaus im Bereich von mehreren Stunden, um eine Ansiedlung von Keimen nachhaltig zu vermeiden.

Die DE 10 2011 008 132 A1 beschreibt weiter ein Verfahren nebst Vorrichtung zur Herstellung von blasgeformten, mindestens bereichsweise sterilen Behältern, bei denen ein Vorformling aus einem thermoplastischen Material zunächst erwärmt und dann von einer Reckstange gereckt und mit einem unter Druck stehenden Fluid beaufschlagt wird, und ferner wird ein Sterilisationsmittel in den Bereich des Vorformlings zugeführt. Als Sterilisationsmittel wird bei dem bekannten Verfahren bevorzugt verdampftes Wasserstoffperoxid verwendet, das mit Heißluft gemischt wird, wobei die Wasserstoffperoxidkonzentration etwa 15 bis 35 Gewichtsprozent beträgt. Die Abbauprodukte dahingehender chemischer Sterilisationsmittel können das Füllgut verunreinigen und toxikologisch mithin bedenkliche Folgen haben.

Durch die DE 695 20 445 T2 ist ein Verfahren sowie eine zugehörige Vorrichtung zum sterilen Verpacken eines Getränks bekannt, bei dem im Rahmen des Blasformgebungsschrittes für den Behälter dieser auf eine Temperatur erhitzt wird, die ausreicht, um das Innere des Behälters zu sterilisieren. Da für eine sichere Sterilisation Temperaturen von deutlich über 200 °C viele Minuten lang notwendig sind, ist die Behältermaterialauswahl an Kunststoffen für dieses bekannte Verfahren entsprechend eingeschränkt und die bevorzugt für die Verpackung von Pharmazeutika verwendeten Polymere, wie Polyethylen oder Polypropylen, können dergestalt aufgrund ihrer niedrigen Einsatz- oder Schmelztemperaturen erst gar nicht verwendet werden.

Des Weiteren ist durch die DE 10 2008 006 073 A1 eine sog. Blasform-, Füll- und Siegelherstellmaschine bekannt, die sich in besonderer Weise für die Herstellung befüllter Behälter für medizinische Zwecke eignet. Hierzu gehören auch Ampullen als Behältererzeugnisse für Augentropfen mit Füllvolumina von beispielsweise 0,1 ml bis 10 ml wie auch Ampullen für Injektionslösungen im Bereich von typischerweise 0,5 ml bis 50 ml. Übliche Taktraten für die Herstellung dahingehend befüllter und verschlossener Blasform-, Füll- und Siegel(BFS)-Behälter liegen im Bereich von 10 bis 18 Sekunden, bei modernen Anlagen, wie sie in der DE 10 2008 006 073 A1 aufgezeigt sind, beträgt die Taktzeit hingegen lediglich nur noch 2 bis 4 Sekunden. Bereits aufgrund dieser geringen Taktzeiten verbietet sich die Anwendung der oben genannten bekannten Sterilisationsverfahren, die so für BFS-Verfahren gar nicht einsetzbar sind, da sich an die Behälterformung die Befüllung innerhalb weniger Sekunden unmittelbar anschließt und ein Vorformling oder ein gar leerer Behälter für einen Sterilisationsvorgang erst gar nicht zur Verfügung steht.

Der mikrobiologische Status von Behältern, hergestellt nach dem BFS-Verfahren, wurde im Artikel von LEO, Frank, et al.: Evaluation of Blow-Fill-Seal-Extrusion Through Processing Polymer Contaminated with Bacterial Spores and Endotoxin. In: PDA-Journal of Pharmaceutical Science and Technology, Bd. 58, Nr. 3, Mai-Juni 2004, S. 147-158, für den Sonderfall einer BFS-Anlage Typ 624 der Firma Weiler Engineering mit Taktraten von 12 bis 18 Sekunden (siehe Seite 148) beschrieben. Hierbei wird in dem Fachartikel unter anderem aufgezeigt, dass es zur Reduzierung von Sporen durch zwei mögliche Mechanismen kommt. Zum einen die thermische Deaktivierung durch die lange Hitzeeinwirkung während der Herstellung (siehe Seite 153, unten links), zum anderen durch die erreichte homogene Verteilung (siehe Seite 153, 5. Absatz) der Sporen in der Schmelze und einer damit verbundenen möglichen thermischen Inaktivierung. Trotz dieser erzielten homogenen Verteilung und der hohen Verweilzeit berichten die Autoren jedoch nur von einer geringen Keimzahlreduktion im Bereich von lediglich 10² bis 10⁴ keimbildenden Einheiten pro Gramm (KBE/g).

Die vorstehend bezeichneten Ergebnisse sind, was die Autoren ausdrücklich betonen, nicht auf andere Anlagen übertragbar, insbesondere nicht auf solche BFS-Anlagen mit deutlich geringeren Verweilzeiten bei erhöhter Temperatur, beispielsweise in Form von Anlagen der Firma rommelag vom Typ 460, die Gegenstand der technischen Lehre nach der DE 10 2008 006 073 A1 sind, bei denen die Taktraten, wie vorstehend angegeben, typischerweise im Bereich von weniger als 5 Sekunden liegen. Bei diesen Anlagen erfolgt kein Schneiden des warmen Polymerschlauchs und die Befüllung erfolgt durch sterile Füllrohre innerhalb des intakten plastifizierten Polymerschlauchs. Dergestalt stellt jedenfalls der Schlauch dann eine sterile Barriere gegenüber Außenräumen oder der Umgebung dar.

Jedoch ist es leider nicht möglich, immer zu garantieren, dass das für den BFS-Prozess verwendete Polymergranulat mikrobiologisch ausreichend gering belastet ist. So kann es in der Praxis teilweise auch durch unsachgemäßen Transport, Lagerung und Handhabung des Kunststoffgranulats dazu kommen, dass mikrobiologische Kontaminanten, beispielsweise in Form von Sporen, auf die Granulatoberfläche gelangen können, was zu einer unerwünscht hohen mikrobiologischen Belastung führen kann, die durch das bisherige BFS-Verfahren nach dem Stand der Technik nicht in ausreichendem Maße reduziert wird.

Die US 4 063 865 beschreibt einen Schlauchkopf mit den Merkmalen im Oberbegriff von Anspruch 1, der ein Gehäuse aufweist, in dem zwei Führungsbahnen als Teil der Führungseinrichtung angeordnet sind, die jeweils, ausgehend von einem höchsten Einspeisepunkt für die Kunststoffschmelze, in einer Ebene liegend zwei nach außen hin in dieser Ebene abfallende Versorgungsstränge aufweisen, die unter Einbindung des Einspeisepunktes nach allen Seiten hin ausgehend von dieser Ebene den schlitzförmigen Abgabequerschnitt im Schlauchkopfgehäuse versorgen zwecks Abgabe eines in sich geschlossenen Kunststoffmantels für die nachfolgende Behältererzeugung, wobei der Schlauchkopf schlitzförmig ausgebildet von einer zentralen Abgabestelle aus, die von dem Ausgang der Extrudereinrichtung versorgbar ist, einen linienförmigen Mantelaustrag veranlasst.

Eine Mischeinrichtung geht aus der EP 1 825 906 A1 hervor.

Ausgehend von diesem Stand der Technik liegt der Erfindung die Aufgabe zugrunde, einen Schlauchkopf und eine Vorrichtung bereit zu stellen, die sich in BFS-Herstellprozessen integrieren lassen und dabei helfen, die mikrobiologischen Kontaminanten signifikant zu deaktivieren.

Diese Aufgabe löst ein Schlauchkopf mit den Merkmalen des Patentanspruchs 1 in seiner Gesamtheit sowie eine Vorrichtung mit einem solchen Schlauchkopf gemäß der Merkmalsausgestaltung des Patentanspruchs 2.

Gemäß dem Kennzeichen von Anspruch 1 ist vorgesehen, dass der Schlauchkopf einen ovalähnlichen Querschnitt (Ovalpinole) für die Kunststoffmaterialabgabe an Formwerkzeuge einer Herstellmaschine aufweist.

Die Vorrichtung zur Reduzierung mikrobiologischer Kontaminanten beruht auf einer speziellen Strömungsführung des aufgeschmolzenen Polymers unmittelbar vor Austritt aus der Düse eines Schlauchkopfes, der unmittelbar der Blasform-, Füll- und Siegelherstellmaschine vorgeschaltet ist.

Für das angesprochene BFS-Verfahren werden üblicherweise Werkzeuge für den Schlauchkopf eingesetzt im Rahmen konstruktiv einfach aufbauender Ringnutverteiler, Wendelverteiler, Stegdornverteiler, Siebkorbverteiler oder Lochplattenverteiler. Solche Verteiler werden detailliert erläutert in: MICHAELI, Walter: Extrusionswerkzeuge für Kunststoffe und Kautschuk - Bauarten, Gestaltung und Berechnungsmöglichkeiten. München : Carl Hanser, 2009.

Im Gegensatz zu diesen bekannten Verteilerwerkzeugen ist erfindungsgemäß in vorteilhafter Weise ein Schlauchabgabekopf mit ovalem Querschnitt, bestehend aus einem ovalen Gehäuse und einer Ovalpinole, verwendet, wobei zwei Einspeisungen zeitgleich und symmetrisch entlang des Abgabe-Ovals erfolgen.

Im Vergleich zu sonst üblichen Verteilern resultiert die Strömungsführung des plastifizierten Polymers im erfindungsgemäßen Schlauchkopf in einem sehr engen Verweilzeitspektrum der Polymerschmelze entlang des Umfangs des zu erzeugenden Schlauchs. Durch diese einheitliche Verweilzeit des Polymers und den Strömungen in den dünnen, flächigen Verteilerkanälen, als Bestandteil der erfindungsgemäßen Strömungsführung im Rahmen der Führungseinrichtung, kommt es zu der vorteilhaften inhomogenen Ausrichtung mikrobiologischer Kontaminanten ins Innere des Polymerschlauchs hinein und somit zur verbesserten Keiminaktivierung durch Kunststoffmaterial, das mikrobiologische Kontaminanten hermetisch einschließt und einen Kontakt der Kontaminanten zum Füllgut, aber auch zur Außenoberfläche des Behälters verhindert.

Dadurch, dass die angesprochene Führungseinrichtung derart eine Strömungsleitung für das aufgeschmolzene Kunststoffmaterial aufweist, dass die mikrobiologisch belasteten Kunststoffmaterialbereiche von den Oberflächen ins Innere des Polymerschlauches oder -stranges geführt werden, sodass Kontaminanten von weniger belasteten Kunststoffmaterialbereichen des dann fertig hergestellten Kunststoff-Behältererzeugnisses allseitig her umfasst sind, sind etwaig vorhandene mikrobiologische Kontaminanten, wie Sporen, Bakterien, Endotoxine etc., sicher von unbelastetem Kunststoffmaterial eingeschlossen, so dass diese den mikrobiologischen Status des Behälterinhalts, seine Sterilität, nicht mehr nachteilig beeinträchtigen können. Diese Erkenntnis zwecks Erhalt eines sicheren Einschlusses von unerwünschten mikrobiologisch wirksamen Kontaminanten, also eine bewusst inhomogene Verteilung von biologischen Teilchen im Polymer einzusetzen, ist im Stand der Technik nicht nachweisbar und für einen Durchschnittsfachmann auf dem Gebiet der Herstellung von Kunststoff-Behältererzeugnissen überraschend. Dabei kommt der erfindungsgemäßen Vorrichtung zugute, dass, wie dargelegt, das Ausgangsmaterial Kunststoffgranulat nur an seiner Oberfläche mikrobiologisch kontaminiert ist, und mikrobiologische Kontaminanten dann in das Innere des Kunststoffschlauches und somit ins Innere einer Behälterwand geführt und somit inaktiviert werden.

Insbesondere hat sich in überraschender Weise gezeigt, dass gerade bakterielle Sporen durch Verwendung von speziellen, überwiegend distributiv mischenden Zusatzelementen im Extruder, respektive der Extrudereinrichtung sich überwiegend durch diesen Verkapselungsmechanismus signifikant inaktivieren lassen. Der Einbau eines solchen statischen Schmelzemischers erfolgt ohne den Einsatz weiterer bewegbarer Teile, bevorzugt zwischen der Extrudereinrichtung und einem Schlauchkopf, der eine geschlossene Kunststoff-Mantelfläche abgibt, die später die Behälterwand der Behältererzeugnisse bildet.

Der Einsatz von solchen statischen Mischern bei dem beschriebenen BFS-Verfahren ist in der Vergangenheit von Fachleuten vermieden worden, da die statischen Mischer zwangsläufig mit einem Druckverlust verbunden sind, der eine druckfestere Auslegung des Extrusion-Systems notwendig macht und den Energiebedarf im Betrieb der Maschine deutlich erhöht. Mischelemente werden typischerweise nur eingesetzt, um eine gleichmäßige, homogene Verteilung von dem Polymer zugesetzten Farbstoffen, Füllstoffen, Verstärkungsfasern, etc. zu erzielen.

Obwohl die genannten statischen Mischelemente - im Gegensatz zu dynamischen Mischern - die Temperatur des verwendeten Polymers nicht wesentlich verändern und somit ein thermischer Effekt (Hitzesterilisationseffekt) des Mischers auf die Keimzahlreduktion ausgeschlossen werden kann, kommt es zu einer signifikanten Sporeninaktivierung durch verkapselnden Einschluss des Sporenmaterials durch unkontaminierten Kunststoff, also einer vorteilhaften inhomogenen Verteilung mikrobiologischer Kontaminanten über den Querschnitt eines Schmelzestranges und überraschenderweise daraus resultierend einer vorteilhaften inhomogenen Verteilung mikrobiologischer Kontaminanten über den Querschnitt einer Behälterwand. Dies hat so keine Entsprechung im Stand der Technik.

Weitere vorteilhafte Ausgestaltungen der erfindungsgemäßen Lösung sind Gegenstand der Unteransprüche.

Im Folgenden wird die erfindungsgemäße Vorrichtung nebst Schlauchkopf anhand eines Ausführungsbeispiels nach der Zeichnung näher erläutert. Dabei zeigen in prinzipieller und nicht maßstäblicher Darstellung die
- Fig. 1: eine stark vereinfacht gezeichnete Gesamt-Darstellung eines Ausführungsbeispiels einer Blasform-, Füll- und Siegelherstellmaschine, insbesondere gemäß der Lehre nach der DE 10 2008 006 073 A1 (Herstellmaschinen-Typ 460 der Firma rommelag);
- Fig. 2: in stark vereinfacht gezeichneter Gesamt-Darstellung, teilweise im Längsschnitt gezeichnet, eine übliche Extrudereinrichtung mit eingangsseitigem Einfülltrichter für das Kunststoffgranulat und ausgangsseitig angeordnetem Schlauchkopf, der das angeschmolzene Kunststoffmaterial eingangsseitig auf der Oberseite der BFS-Vorrichtung nach der Fig. 1 an diese abgibt;
- Fig. 3a, b, c: in Längsdarstellung, teilweise in Draufsicht sowie teilweise geschnitten und teilweise in Ansicht eine Seitendarstellung auf den Schlauchkopf nach der Fig. 2; und
- Fig. 4: einen schematischen Querschnitt durch ein erfindungsgemäß hergestelltes, befülltes Behältererzeugnis (ovale Ampulle) mit einer vorteilhaft inhomogenen Verteilung mikrobiologischer Kontaminanten, also Bereichen unterschiedlicher Kontaminationskonzentrationen.

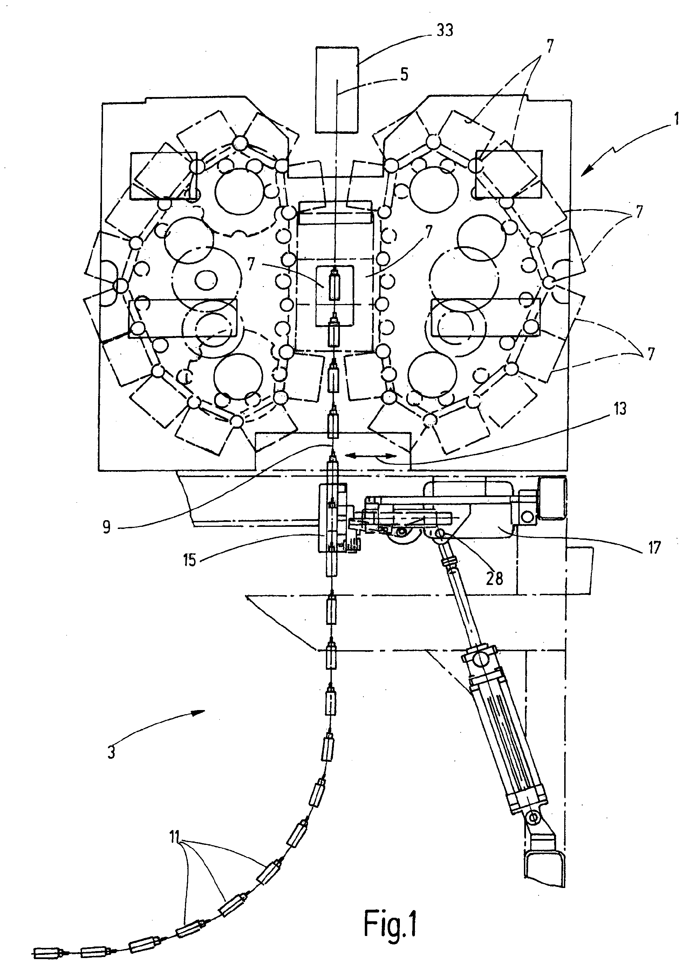

In der Fig. 1 sind ein in der Figur obenliegender Herstellabschnitt als Ganzes mit 1 und eine sich nach unten daran anschließende Entformungseinrichtung als Ganzes mit 3 bezeichnet. Bei dem Herstellabschnitt 1 handelt es sich um eine Maschineneinrichtung zum Durchführen eines sog. Blasform-, Füll- und Siegelverfahrens entsprechend dem weitgehend bekannten bottelpack®-System, und zwar in einer Ausführungsform, bei der entlang einer Herstellungslinie 5 verschiedene Formgebungsschritte an verschiedenen Stationen durchgeführt werden. In einer Art Karussell-Anordnung werden hierbei Einzel-Formteile 7, von denen in der Fig. 1 lediglich einige beziffert sind, auf einer Art fiktiven Kreisbogenbahn paarweise aufeinander zu bewegt, um eine geschlossene Herstellform zu bilden, und zum Öffnen der jeweiligen Form wieder auseinander bewegt. Da nach dem bottelpack®-Verfahren arbeitende Maschineneinrichtungen an sich bekannt sind, erübrigt sich eine nähere Erläuterung der Einzelheiten des Herstellabschnitts 1 von Fig. 1.

Wie aus der Fig. 1 weiter ersichtlich ist, tritt die mittels der Einzel-Formteile 7 gebildete Behälterkette 9 entlang der Herstellungslinie 5 am unteren Ende des Herstellabschnitts 1 aus diesem hinaus und gelangt eingangsseitig zu der Entformungseinrichtung 3. Bei der Behälterkette 9 handelt es sich um eine breitflächige Behälterkettenbahn, bei der eine Mehrzahl von Einzelbehältern 11 ampullenartiger Gestalt als Kunststoff-Behältererzeugnisse in der Behälterkette 9 Seite an Seite und in die Zeichenebene der Fig. 1 hineinragend nebeneinanderliegend angeordnet sind.

Um das Ablösen der Behälter 11 und mithin der Behälterkette 9 von den Wänden der sich am Austrittsbereich voneinander weg bewegenden Einzel-Formteile 7 zu unterstützen, vermittelt die Entformungseinrichtung 3 der Behälterkette 9 eine Auslenkbewegung, wie sie in Fig. 1 mit Doppelpfeil 13 angedeutet ist. Zu diesem Zweck weist die Entformungseinrichtung 3 eine Mitnehmeranordnung 15 auf, die in getrieblicher Verbindung mit einem elektrischen Antriebsmotor 17 die Auslenkbewegung der Behälterkette 9 erzeugt, um die Behälter 11 von den Formwandteilen der Formteile 7 sicher abzulösen. Die näheren Einzelheiten zu dem weiteren Aufbau der dahingehenden Herstellmaschine 1 nebst Entformungseinrichtung 3 kann der DE 10 2008 006 073 A1 entnommen werden.

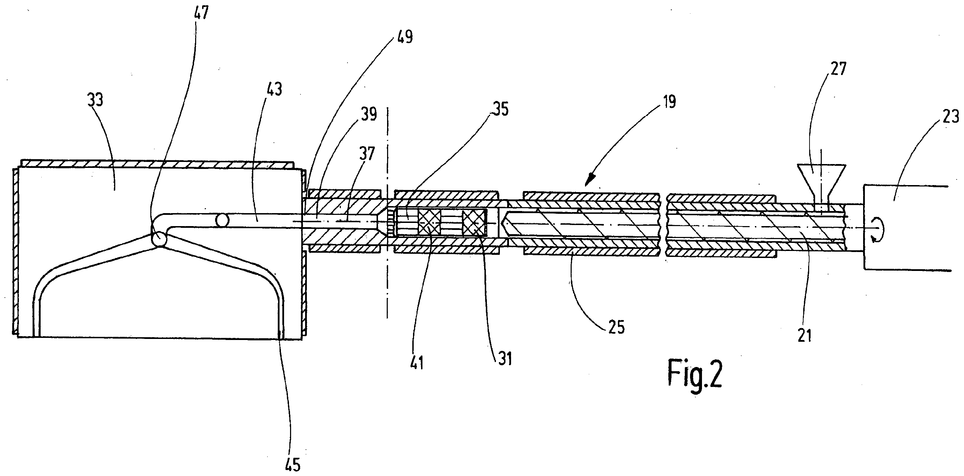

Die dahingehende Blasform-, Füll- und Siegelherstellmaschine 1 nebst Entformungseinrichtung 3 nach der Fig. 1 bildet im Rahmen des Gesamt-Herstellverfahrens eine weitere, sich anschließende Herstellkette zu einer ersten Herstellkette aus, die mit ihren wesentlichen Komponenten Gegenstand der Fig. 2 ist. Diese erste Herstellkette umfasst eine als Ganzes mit 19 bezeichnete Extrudereinrichtung unter Einsatz eines sog. Schneckenextruders, dessen Förderschnecke 21 mittels eines Antriebs 23 antreibbar ist. Außenumfangsseitig sind an der drehbaren Förderschnecke 21 Heizeinrichtungen 25 angeordnet, um das mittels eines Zuführtrichters 27 zugeführte Kunststoffgranulat (nicht dargestellt) zu plastifizieren, respektive zu verflüssigen. Während sich der Zuführtrichter 27 auf der rechten Eingangsseite der Förderschnecke 21 befindet, ist auf deren Ausgangsseite eine Mischereinrichtung 31 angeordnet, die das plastifizierte, respektive teilverflüssigte Kunststoffmaterial an einen Schlauchkopf 33 weiterleitet. Der dahingehende Schlauchkopf 33 weist eine Art ovalen Querschnitt auf, was noch näher erläutert werden wird, um dergestalt vorhangartig einen mantelseitig in sich geschlossenen Kunststoffschlauch an die Herstellmaschine 1 abzugeben. Der einfacheren Darstellung wegen wurden die weiteren Herstelleinrichtungen der Blasform-, Füll- und Siegelherstellmaschine 1 beispielsweise in Form der Fülldorne für das Einbringen des im Behälter zu bevorratenden flüssigen Behälterinhalts ebenso weggelassen wie etwaige Blasdorne zum Erzeugen der Blasform sowie etwaig vorhandene Vakuumeinrichtungen zum verbesserten Anlegen des Kunststoffmaterials an die Forminnenwand der Einzel-Formteile 7 der Herstellmaschine 1. Die dahingehenden Herstellmaßnahmen sind an sich bekannt, so dass an dieser Stelle hierauf nicht mehr näher eingegangen wird.

Die Verarbeitungstemperatur von Polyethylen als eingesetztem Kunststoffmaterial beträgt ca. 170 °C bis 200 °C und bei Polypropylenmaterialien ca. 180 °C bis 250 °C, wobei der Abgabedruck hinter der Extrudereinrichtung 19 mit der Mischereinrichtung 31 an der Stelle des Übergangs zum Schlauchkopf 33 regelmäßig etwa 100 bis 400 bar beträgt.

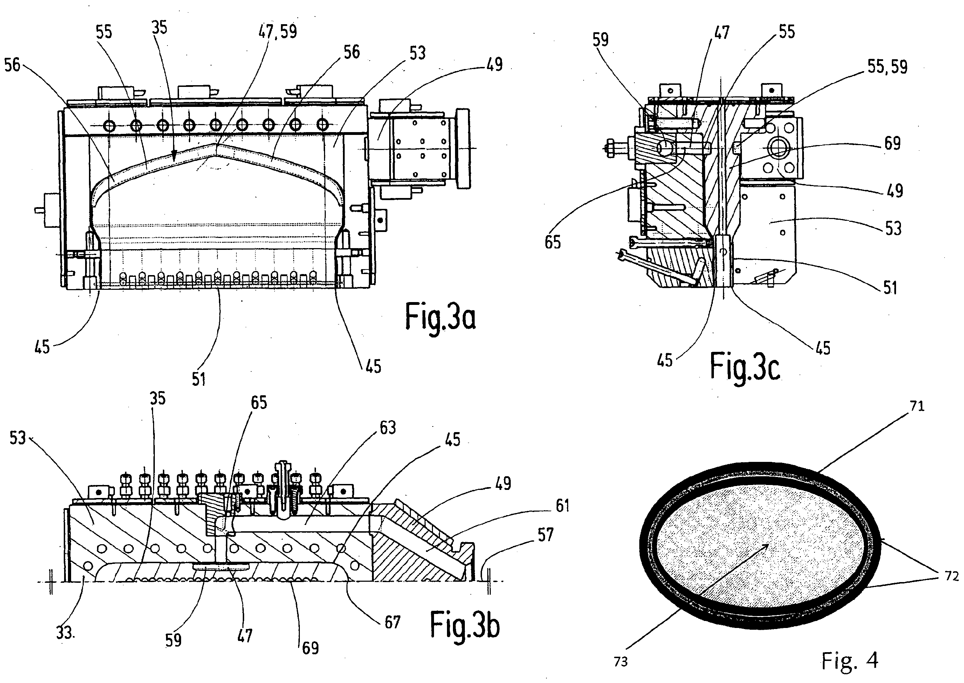

Erfindungsgemäß weist die Extrudereinrichtung im Rahmen der Mischereinrichtung 31 eine Führungseinrichtung 35 auf, die derart eine Strömungsführung für das aufgeschmolzene Kunststoffmaterial erlaubt, dass die eventuell vorhandenen mikrobiologischen Kontaminanten ins Innere des Kunststoffstranges 37 wandern, die von weniger belasteten Kunststoffmaterialbereichen eingeschlossen 39 sind. Die überwiegend distributiv mischenden Mischteile der jeweiligen Mischereinrichtung 31 bilden statisch konzipierte Schmelzemischer aus, mit einer Kanalführung 41, die mit biologischen Kontaminanten, wie Sporen, Bakterien oder Endotoxinen etc. belastete Kunststoffanteile mittels der Extrudereinrichtung 19 inhomogen im erzeugten Kunststoffstrang 43 verteilten, was überraschenderweise dazu führt, dass sich Kontaminanten ebenfalls im Polymerschlauch und somit in der Wandung (Fig. 4) des Behältererzeugnisses 11 überwiegend im Inneren 71 der Wandung konzentrieren und die von weniger belasteten Kunststoffanteilen 72 eingeschlossen sind, was die Wirksamkeit der genannten Kontaminanten gegenüber dem Füllgut 73 im Kunststofferzeugnis 11 und mithin deren schädigende Einflussnahme signifikant reduziert.

Als statische Mischereinrichtungen 31 kommen beispielsweise Mischelemente ohne bewegbare Teile zum Einsatz, wie sie unter den Typbezeichnungen SMX™ und SMX™plus bei der Firma Sulzer Chemtec AG, Winterthur, Schweiz, bezogen werden können. Ebenso sind Schmelzemischer SMB plus der Firma Promix Solutions, Linden, Deutschland oder der Schmelzemischer CSE-X der Firma Fluitec, Neftenbach, Schweiz, hierfür geeignet. Ferner sind solche statischen Mischereinrichtungen von ihrem technischen Aufbau her verwendbar, wie in dem Patent US 7 077 561 B2 beschrieben sowie in der Anmeldung US 2012/0106290 A1.

Erfindungsgemäß zeigen die genannten statischen Mischereinrichtungen 31, das Erreichen der gewünschten an sich inhomogenen Verteilung von mikrobiologischen Kontaminanten, obwohl diese Mischer eigentlich zur Homogenisierung von Polymerschmelzen, insbesondere bei Zugabe von Farbstoffen, Füllstoffen etc., eingesetzt werden.

Überraschenderweise wurde also gefunden, dass an sich bekannte Statikmischer ein völlig unterschiedliches Mischverhalten zeigen: Während Farbstoffe, Füllstoffe, Verstärkungsfasern etc. und ähnliche Partikel homogen in der Behälterwand verteilt werden - was bei Farbstoffen aus optischen Gründen stets gefordert wird -, kommt es bei mikrobiologischen Kontaminanten zu der beschriebenen, erfindungsgemäß vorteilhaften, eher inhomogenen Verteilung, dem beschriebenen Einkapselungseffekt.

Wie bereits erläutert bleibt erstaunlicherweise die vorteilhaft inhomogene Verteilung des massiven Kunststoffschmelzstranges 43 auch bei der Formung des Polymerschlauches und somit im Querschnitt (Fig. 4) des Behälters 11 vorteilhaft erhalten.

Der Grund hierfür ist unbekannt, es wird vermutet, dass dies auf einem komplexen Zusammenspiel mehrerer Faktoren beruht. Hierzu gehören zum einen die Oberflächen-Chemie und Struktur der mikrobiologischen Kontaminanten, insbesondere wahrscheinlich deren physikalische Benetzbarkeit und chemische Wechselwirkungen mit heißen Polymerschmelzen, zum anderen deren Größe und Formfaktoren, welche die Ausrichtung der mikrobiologischen Kontaminanten in der Schmelzeströmung beeinflussen. Hierbei ist zu berücksichtigen, dass die rheologischen Eigenschaften des Polymers stark von Temperatur, von Scherkräften und der Molekülmassenverteilung der Polymere selbst abhängen, und somit deren Verteilung über Strang- oder Schlauchquerschnitt beeinflussen.

Die bisher beschriebene Führungseinrichtung für den Kunststoffstrang 43 kann zusätzlich oder alternativ zu der jeweiligen statischen Mischereinrichtung 31 den Schlauchkopf 33 in Fertigungslinie vor der Herstellmaschine 1 mit einem oval ähnlichen Querschnitt für die Kunststoffmaterialabgabe an die Formwerkzeuge 7 der Herstellmaschine 1 aufweisen. Der dahingehende Abgabequerschnitt 45 ist schlitzförmig ausgebildet (vgl. Fig. 3a, 3b) und wird von einer zentralen Abgabestelle 47 aus versorgt, die wiederum von dem Ausgang 49 der Extrudereinrichtung 19 versorgt ist und dergestalt einen gardinenförmigen umfangsseitig geschlossenen Mantelaustrag 51 auf der Ausgangsseite des Schlauchkopfes 33 ermöglicht.

Wie die Fig. 3a und Folgende weiter zeigen, verfügt der Schlauchkopf 33 über ein Gehäuse 53, in dem zwei voneinander separierte Führungsbahnen 55 als Teil der Führungseinrichtung 35 verlaufen. Die beiden Führungsbahnen 55 liegen in Blickrichtung auf die Fig. 3b gesehen symmetrisch auf gegenüberliegenden Seiten einer Längsachse 57 des Schlauchkopfes 33, die parallel zur Förderrichtung der Extrudereinrichtung 19 angeordnet ist. Die beiden Paare an Führungsbahnen 55 werden, ausgehend von einem höchsten Einspeisepunkt 59, für die Kunststoffschmelze in einer Ebene liegend entsprechend versorgt, die in Form von paarweise angeordneten Versorgungssträngen 56 nach außen hin, ausgehend von dieser Ebene, abfallen.

In Blickrichtung auf die Fig. 3b gesehen erweitert sich der Ausgang 49 der Extrudereinrichtung 19 konisch in Richtung auf den Schlauchkopf 33 zu und weist intern einen Zuführkanal 61 auf, der über einen weiteren Kanalabschnitt 63 im Schlauchkopf 33 in eine Bogenzuführung 65 ausmündet, die den Einspeisepunkt 59 versorgt. Aufgrund des symmetrischen Aufbaus des Schlauchkopfes 33 ist die insoweit beschriebene Zuführanordnung auch, in Blickrichtung auf die Fig. 3b gesehen, gegenüber der Längsachse 57 der Einrichtung in einer darunterliegenden Ebene vergleichbar angeordnet. Insoweit wird über die jeweilige Führungseinrichtung 35 mit dem höchsten Einspeisepunkt 59 die Ovalpinole 67 des Schlauchkopfs 33 versorgt.

Die jeweils beiden Versorgungsstränge 56 als Teil einer jeden Führungsbahn/Verteilerkanal 55 unter Einbindung des obersten Einspeisepunktes 59 erlauben nach allen Seiten hin, ausgehend von der dahingehenden Abgabeebene, die Versorgung des schlitzförmig ausgestalteten Abgabequerschnitts 45 an der Unterseite des Schlauchkopfgehäuses 53. Gemäß der Darstellung nach der Fig. 3c erfolgt die dahingehende Schlitzverjüngung bereits unmittelbar nach Verlassen des Kunststoffmaterials aus dem Bereich der Führungsbahnen 55 respektive der Versorgungsstränge 56.

Die Führungsbahnen 55 im Schlauchkopf 33 begrenzen außenumfangsseitig jeweils Aufnahmen 69, die von Fülldornen (nicht dargestellt) der Herstellmaschine 1 durchfahrbar sind. Dergestalt lassen sich die blasgeformten Kunststoff-Behälter mit einem Füllmedium steril befüllen. Durch die einheitliche Verweilzeit des Polymers für die Behälterwand und die Durchströmungen in den dünnflächigen Verteilerkanälen, die den schlitzförmigen Abgabequerschnitt 45 bilden, kommt es zu einer inhomogenen Ausrichtung der mikrobiologischen Kontaminanten ins Innere des derart gebildeten Polymerschlauchs, der in Blickrichtung auf die Fig. 1 gesehen von oben der Herstellmaschine 1 zugeführt wird.

Im Rahmen einer praktischen Überprüfung der erfindungsgemäßen Vorrichtungslösung wurden für alle Ausführungsbeispiele Materialien, Behältergrößen und Maschineneinstellungen gewählt, die den ungünstigsten Fall (worst case) betreffend den Mechanismus der Reduzierung mikrobiologischer Kontaminanten darstellen. Als Beispiel für mikrobiologische Kontaminanten wurden, wie in der Sterilitätsprüfung üblich, resistente Sporen von Bazillus atrophaeus und Bazillus pumilus als Testkeime ausgewählt. Als Behältermaterialien wurden ferner Polymere verwendet, die niedrige BFS-Verarbeitungstemperaturen aufweisen, um thermische Effekte auf die künstlich zugesetzten Sporen gering zu halten. Auch wurden Prozessparameter gewählt, die möglichst nur minimale Effekte auf die Sporen ausüben, jedoch zu Behältererzeugnissen in verwendbarer Qualität und üblichen Ausbeutemengen führen. So wurde der Durchsatz von Polymer durch die Extrudereinrichtung 19 an der oberen Grenze eingestellt, um damit die Dauer der Wärmeeinwirkung auf die künstlich zugesetzten Sporen zu minimieren.

Ferner wurde eine BFS-Anlage vom Typ 460 der Firma rommelag, Waiblingen, Deutschland, verwendet, wie sie in der Fig. 1 teilweise dargestellt ist, mit einer Zykluszeit für die gesamte Behälterherstellung von ca. 3,5 Sekunden. Als Kunststoffgranulat, das über den Zuführtrichter 27 der Extrudereinrichtung 19 zugeführt wird, wurden Polymere eingesetzt wie Purell LDPE Type 1840 H der Firma LyondellBasell sowie Ineos LDPE Type Eltex MED PH 23H630 mit Verarbeitungstemperaturen des Extruders 19 sowie auch des Schlauchkopfes 33 im Bereich zwischen 160 °C bzw. 165 °C.

Zur Herstellung der kontaminierten Granulat-Proben wurden Endosporen des Bazillus atrophaeus ATTC 9372 mit einem D-Wert D_{160°C} = 0,285 ± 0,08 min verwendet. In analoger Weise wurden Sporen des sehr kleinen Referenzkeims, Bazillus subtilis 1031, eingesetzt. Die Sporen wurden gleichmäßig auf das eingesetzte Kunststoff-Granulat verteilt und der Sporengehalt labortechnisch verifiziert. Der Konzentrationsbereich betrug 10³ bis 10⁶ KBE pro Gramm. Es wurden ferner mit 6 ml flüssige CASO-Nährlösung befüllte Behälter 11 der Größen 10 ml hergestellt.

Zur näheren Erläuterung: CASO-Nährlösung ist ein Komplexmedium, dem, außer Glucose, aus Milcheiweiß proteolytisch gewonnenes Pepton (Caseinpepton) und aus Sojamehl proteolytisch gewonnenes Pepton (Sojamehlpepton) zugesetzt wird. Das Caseinpepton ist reich an freien Aminosäuren und das Sojamehlpepton zeichnet sich durch einen hohen Gehalt an Kohlenhydraten und Vitaminen aus. Solche Nährmedien eignen sich besonders zur Kultivierung von anspruchsvollen Mikroorganismen.

Je Testcharge wurden über 12.000 Behältererzeugnisse gefertigt, wobei ansonsten die analytische Vorgehensweise dem Inhalt des eingangs erwähnten Artikels von Frank Leo et al "Evaluation of Blow-Fill-Seal-extrusion through processing Polymer Contaminated with bacterial Spores and Endotoxin" entspricht.

Zunächst wurden drei Referenzchargen, d.h. ohne Anwendung der erfindungsgemäßen Methoden, zur Sporeninaktivierung gefertigt. Hierfür wurde ein in der Extrusionstechnik üblicher Steckdornverteiler mit Löchern als dynamische Mischereinrichtung (wie im Buch von W. Michaeli gezeigt) und ein Schlauchkopf mit kreisförmigen Querschnitt und kreiszylindrischer Pinole eingesetzt, wobei sich eine Keimzahlreduktion insbesondere aufgrund thermischer Effekte von durchschnittlich 10³ KBE/Gramm (keimbildende Einheiten pro Gramm) ergab.

Sofern man das mit Sporen des Bazillus atrophaeus kontaminierte Polymergranulat extrudiert unter Einsatz der vorstehend beschriebenen statischen Mischereinrichtungen 31, wobei die Gesamtlänge der Extrudereinrichtung 19 gegenüber den Referenzversuchen unverändert blieb, ergab sich bereits eine um den Faktor 50-170 verbesserte Deaktivierung des Kontaminanten durch die angesprochene Verkapselung. Bei Einsatz von Sporen des Bazillus subtilis ergab sich ein um den Inaktivierungsfaktor von durchschnittlich 100 erhöhter Effekt gegenüber der Referenz.

Sofern man zusätzlich oder alternativ das kontaminierte Polymergranulat mit einem Schlauchkopf 33 mit Ovalpinole 67 gemäß der Ausgestaltung nach den Fig. 3a bis 3c einsetzt, ergibt sich wiederum eine ungefähr um den Faktor 70-230 vergrößerte Inaktivierung der eingesetzten Sporen. In weiterführenden Versuchen wurden auch Sporen des im Vergleich zu Sporen des Bazillus atrophaeus größeren Bacillus megaterium CDC 684 und des mit einem durchschnittlichen Länge-zu-Durchmesserverhältnis von ca. 1.27 eher kugelförmigen Bacillus sphaericus ATCC 4525, sowie mit Sporen des Bacillus stearothermophilus ATCC 12980 durchgeführt. Letztere haben im Vergleich zu den Sporen des Bazillus subtilis fast doppelten Durchmesser. In allen Versuchen ergaben sich gegenüber der jeweiligen Referenz deutlich verbesserte Inaktivierungen der jeweiligen Sporen.

Alle vorgenannten erfindungsgemäßen Methoden nebst der erfindungsgemäßen Vorrichtung zur Minimierung der mikrobiologischen Belastung haben den Vorteil, dass nicht ein leerer Behälter oder gar ein bereits befüllter Behälter 11 zu sterilisieren ist, wie im Stand der Technik aufgezeigt, sondern dass lediglich das bereits plastifizierte Polymer als Mechanismus der Inaktivierung durch Verkapselung ausreicht, was so keine Entsprechung im Stand der Technik hat.

Bei der Herstellung von Mehrschichtbehältern nach dem BFS-Verfahren, wie z.B. in der DE 103 47 908 A1 aufgezeigt, genügt gegebenenfalls die Anwendung der jeweils bezeichneten, erfindungsgemäßen Vorrichtungen lediglich für das Polymergranulat, das die Innenoberfläche des Behälters 11 bildet.

## Patentansprüche

1. Schlauchkopf, der ein Gehäuse (53) aufweist, in dem zwei Führungsbahnen (55) als Teil der Führungseinrichtung (35) angeordnet sind, die jeweils, ausgehend von einem höchsten Einspeisepunkt (59) für die Kunststoffschmelze, in einer Ebene liegend zwei nach außen hin in dieser Ebene abfallende Versorgungsstränge (56) aufweisen, die unter Einbindung des Einspeisepunktes (59) nach allen Seiten hin ausgehend von dieser Ebene den schlitzförmigen Abgabequerschnitt (67) im Schlauchkopfgehäuse (53) versorgen zwecks Abgabe eines in sich geschlossenen Kunststoffmantels für die nachfolgende Behältererzeugung,
wobei der Schlauchkopf schlitzförmig ausgebildet von einer zentralen Abgabestelle (47) aus, die von dem Ausgang (49) der Extrudereinrichtung (19) versorgbar ist, einen linienförmigen Mantelaustrag (51) veranlasst,
**dadurch gekennzeichnet,**
**dass** der Schlauchkopf einen ovalähnlichen Querschnitt (Ovalpinole 67) für die Kunststoffmaterialabgabe an Formwerkzeuge (7) einer Herstellmaschine (1) aufweist.

2. Vorrichtung zur Reduzierung der mikrobiologischen Kontaminanten von Behältererzeugnissen (11), bei der ein Kunststoffgranulat einer Extrudereinrichtung (19) zugeführt ist, die das Granulat aufschmilzt, das anschließend an eine Blasform-, Füll- und Siegelherstellmaschine (1) für den Erhalt des jeweiligen Behältererzeugnisses (11) weitergeleitet wird, mit einer Führungseinrichtung (35) zum gezielten Führen des plastifizierten Kunststoffmaterials von der Extrudereinrichtung (19) zur genannten Herstellmaschine (1), **dadurch gekennzeichnet, dass** mindestens eine Führungseinrichtung (35) derart mindestens eine Strömungs- oder Kanalführung (41, 55) in Form eines Schlauchkopfes gemäß Anspruch 1 für das aufgeschmolzene Kunststoffmaterial aufweist, dass mikrobiologische Kontaminanten überwiegend ins Wandinnere (71) des Polymerschlauches geführt werden, das von weniger belasteten Kunststoffmaterialbereichen (72) umfasst wird.

3. Vorrichtung nach Anspruch 2, **dadurch gekennzeichnet, dass** die Extrudereinrichtung (19) ausgangsseitig in Richtung der Herstellmaschine (1) mit einer überwiegend distributiv mischenden Mischereinrichtung (31) versehen ist.

4. Vorrichtung nach Anspruch 3, **dadurch gekennzeichnet, dass** die Mischereinrichtung (31) ein statisch konzipierter Schmelzemischer ist mit einer Strömungs- oder Kanalführung (41), die mikrobiologische Kontaminanten im Kunststoffstrang (43) inhomogen verteilt.

5. Vorrichtung nach einem der Ansprüche 2 bis 4, **dadurch gekennzeichnet, dass** die jeweils beiden Versorgungsstränge (56) unter Einbindung des Einspeisepunktes (59) nach allen Seiten hin ausgehend von dieser Ebene den schlitzförmigen Abgabequerschnitt (45) im Schlauchkopfgehäuse (53) versorgen.

6. Vorrichtung nach einem der Ansprüche 2 bis 5, **dadurch gekennzeichnet, dass** die jeweiligen beiden Führungsbahnen (55) sich in Richtung der Herstellmaschine (1) zunächst mit gleichbleibendem Abgabequerschnitt spaltmäßig in Richtung der Herstellmaschine (1) derart verjüngen, dass auf der Seite des Mantelaustrags (51) eine gleichmäßige Abgabegeschwindigkeit im Hinblick auf diesen Mantelaustrag (51) erfolgt.

7. Vorrichtung nach einem der Ansprüche 2 bis 6, **dadurch gekennzeichnet, dass** die jeweiligen beiden Führungsbahnen (55) in einer Längsachse (57) des Schlauchkopfes (33) parallel zur Abgaberichtung der Extrudereinrichtung (19) symmetrisch verlaufend angeornet sind.

8. Vorrichtung nach einem der Ansprüche 2 bis 7, **dadurch gekennzeichnet, dass** die beiden Führungsbahnen (55) im Schlauchkopf (33) außenumfangsseitig Aufnahmen (69) begrenzen, die von Fülldornen der Herstellmaschine (1) durchfahrbar sind.

9. Vorrichtung nach einem der Ansprüche 2 bis 8, **dadurch gekennzeichnet, dass** die beiden Führungsbahnen (55) im Schlauchkopf (33) außenumfangsseitig im Gehäuse (53) begrenzt sind.

10. Vorrichtung nach einem der Ansprüche 2 bis 9, **dadurch gekennzeichnet, dass** mittels der Extrudereinrichtung (19) ein Co-Extrusionsverfahren durchgeführt wird, was zu einem Mehrschichtaufbau der Wand des geschlossenen und befüllten Behältererzeugnisses (11) führt und, dass nur das, die Innenoberfläche des derart co-extrudierten Behälters (11) bildende Polymer, der Reduzierung von mikrobiologischen Kontaminanten unterzogen wird.

## Claims

1. Parison die comprising a housing (53) in which two guideways (55) are arranged as part of the guide apparatus (35), each of said guideways, starting from an uppermost entry point (59) for the molten plastic, comprises two supply strands (56) lying in one plane and sloping downwards and outwards in this plane, which supply the slot-shaped discharge cross-section (67) in the parison die housing (53) on all sides, including the entry point (59), starting from this plane, for the purpose of delivering a self-contained plastic casing for subsequent container production,
the parison die being designed to be slot-shaped and, starting from a central discharge point (47), which can be supplied from the outlet (49) of the extruder apparatus (19), leaving a linear casing discharge (51),
**characterised in that**
the parison die comprises an oval-like cross-section (Ovalpinole 67) for delivering plastics material to moulding tools (7) in a manufacturing machine (1).

2. Device for reducing microbiological contaminants in container products (11), in which a plastic granulate is fed to an extruder apparatus (19), which melts the granulate, which is then conveyed onwards to a blow-fill-seal manufacturing machine (1) to obtain the respective container product (11), with a guide apparatus (35) for selectively guiding the plasticised plastics material from the extruder apparatus (19) to said manufacturing machine (1), **characterised in that** at least one guide device (35) comprises at least one flow or channel guide (41, 55) in the form of a parison die according to claim 1 for the molten plastics material in such a way that microbiological contaminants are predominantly conveyed into the inner wall (71) of the polymer tube, which is surrounded by less contaminated plastics material regions (72).

3. Device according to claim 2, **characterised in that** the extruder apparatus (19) is furnished on the outlet side in the direction of the manufacturing machine (1) with a predominantly distribution-type mixing mixer apparatus (31).

4. Device according to claim 3, **characterised in that** the mixer apparatus (31) is a statically designed melt mixer with a flow or channel guide (41), which distributes microbiological contaminants inhomogeneously in the plastic strand (43).

5. Device according to any one of claims 2 to 4, **characterised in that** each of the two supply strands (56) supplies the slot-shaped discharge cross-section (45) in the parison die housing (53) on all sides, including the entry point (59), starting from this plane.

6. Device according to any one of claims 2 to 5, **characterised in that** the two guideways (55) each taper in the direction of the manufacturing machine (1), initially with a constant discharge cross-section in a slot-like manner in the direction of the manufacturing machine (1), such that, on the side of the casing discharge (51), a uniform discharge speed is achieved with respect to this casing discharge (51).

7. Device according to any one of claims 2 to 6, **characterised in that** the two guideways (55) are each arranged in a longitudinal axis (57) of the parison die (33) extending symmetrically in parallel with the discharge direction of the extruder apparatus (19).

8. Device according to any one of claims 2 to 7, **characterised in that** the two guideways (55) in the parison die (33) delimit receptacles (69) on the outer circumference, through which filling mandrels of the manufacturing machine (1) can pass.

9. Device according to any one of claims 2 to 8, **characterised in that** the two guideways (55) in the parison die (33) are each limited in the housing (53) by their outer circumference.

10. Device according to any one of claims 2 to 9, **characterised in that** a co-extrusion method is carried out by means of the extruder apparatus (19), which leads to a multilayer structure of the wall of the closed and filled container product (11) and **in that** only the polymer forming the inner surface of the container (11) co-extruded in this manner is subjected to reduction of microbiological contaminants.

## Revendications

1. Tête pour tube souple, qui a un corps (53), dans lequel sont disposées deux voies (55) de guidage comme partie du dispositif (35) de guidage, qui chacune, à partir d'un point (59) d'injection le plus haut de la matière plastique fondue, ont, se trouvant dans un plan, deux cordons (56) d'alimentation tombant vers l'extérieur dans ce plan, qui, en intégrant le point (59) d'alimentation en allant de tous les côtés à partir de ce plan, alimentent la section (67) transversale de distribution en forme de fente du corps (53) de la tête pour tube en vue de distribuer une enveloppe en matière plastique en soi fermée pour la production ultérieure de contenant,
dans laquelle la tête pour tube constituée en forme de fente à partir d'un point (47) de distribution central, qui peut être alimenté par la sortie (49) du dispositif (19) d'extrusion, fait qu'une sortie (51) d'enveloppe est en forme de ligne,
**caractérisée**
**en ce que** la tête pour tube a une section transversale de type ovale (ovalpinole 67) pour la distribution de matière plastique à des outils (7) de moulage d'une machine (1) de production.

2. Système de réduction des contaminants microbiologiques de produits (11) de type contenant, dans lequel un granulé de matière plastique est envoyé à un dispositif (19) d'extrusion, qui fait fondre le granulé, qui est acheminé ensuite à une machine (1) de production par moulage, par soufflage, remplissage et scellement pour obtenir le produit de type contenant respectif, comprenant un dispositif (35) de guidage pour le guidage ciblé de la matière plastique plastifiée du dispositif (19) d'extrusion à ladite machine (1) de production, **caractérisé en ce que** la au moins un dispositif (35) de guidage a au moins un guidage (41, 55) d'écoulement ou de canalisation sous la forme d'une tête pour tube souple suivant la revendication 1 pour la matière plastique fondue, de manière à faire passer des contaminants microbiologiques d'une manière prépondérante à l'intérieur (71) de paroi du tube souple polymère, qui est entouré de parties (72) de matière plastique moins chargées.

3. Système suivant la revendication 2, **caractérisé en ce que** le dispositif (19) d'extrusion est pourvu du côté de la sortie, dans la direction de la machine (1) de production, d'un dispositif (31) de mélange mélangeant d'une manière prépondérante distributivement.

4. Système suivant la revendication 3, **caractérisé en ce que** le dispositif (31) de mélange est un mélangeur de masse fondue de conception statique, ayant un guidage (41) d'écoulement ou de canalisation, qui répartit de manière inhomogène les contaminants microbiologiques du cordon (43) de matière plastique.

5. Système suivant l'une des revendications 2 à 4, **caractérisé en ce que** les deux cordons (56) d'alimentation alimentent en intégrant le point (59) d'alimentation de tous les côtés, à partir de ce plan, la section (45) transversale de distribution en forme de fente du corps (53) de la tête pour tube souple.

6. Système suivant l'une des revendications 2 à 5, **caractérisé en ce que** les deux voies (55) de guidage se rétrécissent en direction de la machine (1) de production, en ayant d'abord une section transversale de distribution restant constante à la manière d'une fente dans la direction de la machine (1) de production de manière à obtenir du côté de la sortie (51) d'enveloppe une vitesse de distribution uniforme en ce qui concerne cette sortie (51) d'enveloppe.

7. Système suivant l'une des revendications 2 à 6, **caractérisé en ce que** les deux voies (55) de guidage sont disposées, en s'étendant symétriquement parallèlement à la direction de distribution du dispositif (19) d'extrusion, dans un axe (57) longitudinal de la tête (33) pour tube souple.

8. Système suivant l'une des revendications 2 à 7, **caractérisé en ce que** les deux voies (55) de guidage dans la tête (33) pour tube souple délimitent du côté du pourtour extérieur des logements (69), qui peuvent être traversées par des mandrins de remplissage de la machine (1) de production.

9. Système suivant l'une des revendications 2 à 8, **caractérisé en ce que** les deux voies (55) de guidage dans la tête (33) pour tube souple sont délimitées du côté du pourtour extérieur dans le corps (53).

10. Système suivant l'une des revendications 2 à 9, **caractérisé en ce que**, au moyen du dispositif (19) d'extrusion, on effectue un procédé de co-extrusion, ce qui donne une structure stratifiée de la paroi du produit (11) de type contenant fermé et rempli et **en ce que** seul le polymère formant la surface intérieure du contenant (11) ainsi co-extrudé est soumis à la réduction de contaminants microbiologiques.
